# EUROPÄISCHE PATENTSCHRIFT

(11) **EP 1 236 290 B1**
(45) Veröffentlichungstag und Bekanntmachung des Hinweises auf die Patenterteilung: **05.11.2003**
(21) Anmeldenummer: 99974256.2
(22) Anmeldetag: 08.12.1999
(51) Int. Cl.: H04B 3/56

(54) **KOPPELVORRICHTUNG**
COUPLING DEVICE
DISPOSITIF DE COUPLAGE

(43) Veröffentlichungstag der Anmeldung: 04.09.2002
(73) Patentinhaber: Ascom Powerline Communications AG, 3000 Bern 14 (CH)
(72) Erfinder: MÜLLER, Kurt, CH-8610 Uster (CH); WIDMER, Hanspeter, CH-5507 Mellingen (CH)
(74) Vertreter: Roshardt, Werner Alfred, Dipl.-Phys.
(86) Internationale Anmeldenummer: CH9900590
(87) Internationale Veröffentlichungsnummer: WO01043305

(56) Entgegenhaltungen:
- EP-A- 0 604 678
- WO-A-89/03623
- WO-A-99/48224
- GB-A- 2 304 013
- US-A- 5 777 769

## Beschreibung

### Technisches Gebiet

Die Erfindung betrifft eine Koppelvorrichtung zum Ein- bzw. Auskoppeln eines HF-Signals in ein bzw. aus einem Niederspannungs-Stromversorgungsnetz.

### Stand der Technik

Die Datenkommunikation hat in den letzten Jahren immer mehr an Bedeutung gewonnen. Immer häufiger werden auch grosse Datenmengen wie Musik von hoher Qualität, Videosequenzen oder andere grosse Datenbestände auf elektronischem Weg verschickt. Bestehende Kommunikationsnetze wie beispielsweise das Telefon-Festnetz oder Mobilfunknetze bieten hierfür entweder zu geringe Bandbreiten, sind teuer, häufig stark ausgelastet und müssen vorgängig erst mit enormem Aufwand erstellt werden. Stromversorgungsnetze bilden eine geeignete Alternative für die breitbandige Datenübermittlung, denn erstens verfügt praktisch jeder Haushalt über einen Anschluss ans Stromversorgungsnetz und zweitens lassen sich auch grosse Datenübertragungsraten realisieren. Um Nachrichten über ein Stromversorgungsnetz zu übertragen, müssen sie jedoch zuerst in eine dafür geeignete Form gebracht und danach in das Stromversorgungsnetz eingespiesen werden.

Derartige Vorrichtungen sind bekannt. Die Nachrichten werden zunächst codiert, bei Bedarf komprimiert und anschliessend einem hochfrequenten Trägersignal aufmoduliert. Das so entstehende, hochfrequente Sendesignal wird beim Sender von einem Koppler in das Stromversorgungsnetz eingekoppelt und beim Empfänger auf analoge Weise wieder aus dem Stromnetz ausgekoppelt, demoduliert, das Nachrichtensignal wenn nötig dekomprimiert und schliesslich decodiert.

Bekannte Koppler weisen jedoch einen grossen Nachteil auf: Jeder Koppler benötigt eine eigene Netzsteckdose, über welche das Sendesignal in das Stromversorgungsnetz ein- bzw. ausgekoppelt werden soll. Diese Geräte weisen zudem einen hohen Energieverbrauch auf und sind teuer in der Anschaffung.

### Darstellung der Erfindung

Aufgabe der Erfindung ist es, eine Koppelvorrichtung der eingangs genannten Art anzugeben, welche die Nachteile der bekannten Koppler vermeidet.

Die Lösung der Aufgabe ist durch die Merkmale des Anspruchs 1 definiert. Gemäss der Erfindung weist die Koppelvorrichtung zum Ein- bzw. Auskoppeln eines HF-Signals in ein bzw. aus einem Niederspannungs-Stromversorgungsnetz neben einem Netzanschluss zum Anschliessen der Koppelvorrichtung an das Niederspannungs-Stromversorgungsnetz und einem Datenanschluss zum Anschliessen der Koppelvorrichtung an eine Sende/Empfangsvorrichtung einen Netzausgang auf.

Über den Netzausgang kann ein weiteres Gerät, beispielsweise die Sende/Empfangsvorrichtung oder das Datenendgerät, oder können auch mehrere weitere Geräte mit elektrischer Energie versorgt werden. Über den Netzanschluss der Koppelvorrichtung wird nämlich eine Verbindung zum Niederspannungs-Stromversorgungsnetz hergestellt. Wegen des einfachen Aufbaus lässt sich die Koppelvorrichtung zudem klein und günstig herstellen, was wiederum eine einfache Integration der Koppelvorrichtung in andere Geräte, beispielsweise die Sende/Empfangsvorrichtung, erlaubt.

Die Anzahl Stromleiter, d.h. Null- resp. Phasenleiter, welche am Netzausgang zum Anschliessen anderer Geräte zur Verfügung stehen, kann hierbei kleiner oder gleich der Anzahl Stromleiter des Niederspannungs-Stromversorgungsnetzes sein. Im Allgemeinen wird zumindest der Nullleiter sowie ein Phasenleiter auf den Netzausgang geführt. Falls das Niederspannungs-Stromversorgungsnetz einen Schutzleiter, d.h. einen Erdleiter aufweist, kann auch dieser auf den Netzausgang geführt sein.

Zum Ein- bzw. Auskoppeln des HF-Signals in das bzw. aus dem Niederspannungs-Stromversorgungsnetz ist eine Frequenzweiche mit einem Hochpassfilter und einem Tiefpassfilter vorgesehen. Die Frequenzweiche ist einerseits mit dem Netzanschluss und damit mit dem Niederspannungs-Stromversorgungsnetz und andererseits sowohl mit dem Datenanschluss, als auch mit dem Netzausgang der Koppelvorrichtung verbunden. Das Hochpassfilter ist dabei derart angeordnet, dass es in der Verbindung zwischen dem Netzanschluss und dem Datenanschluss, im Folgenden Datenverbindung oder auch Datenpfad genannt, liegt. Und das Tiefpassfilter ist derart angeordnet, dass es in der Verbindung zwischen dem Netzanschluss und dem Netzausgang, im Folgenden Netzverbindung oder auch Netzpfad genannt, liegt.

Mit einer solchen Frequenzweiche lässt sich das über den Netzanschluss empfangene Gesamtsignal in einen hochfrequenten Anteil mit dem HF-Signal und einen niederfrequenten Anteil mit dem Speisesignal aufteilen. In der Datenverbindung werden durch das Hochpassfilter die niederfrequenten Anteile des Gesamtsignals unterdrückt und in der Netzverbindung filtert das Tiefpassfilter die hochfrequenten Anteile weg. Umgekehrt kann dem niederfrequenten Stromversorgungs-Netzsignal über das Hochpassfilter ein HF-Signal überlagert und auf diese Weise in das Niederspannungs-Stromversorgungsnetz eingekoppelt werden.

Um Geräte, welche zwecks Stromversorgung am Netzausgang der Koppelvorrichtung angeschlossen werden, vor unerwünschten und energiereichen Überspannungen, wie sie in Niederspannungs-Stromversorgungsnetzen vorkommen, zu schützen, ist der Netzausgang vorzugsweise mit einem ersten Überspannungs-Grobschutz abgesichert. Dieser muss für die gesamte Energie einer solchen transienten Überspannung ausgelegt sein, da durch das vorgeschaltete Tiefpassfilter der Frequenzweiche lediglich der energiearme, hochfrequente Teil des Gesamtsignals weggefiltert wird.

Vorteilhafterweise befindet sich in der Netzverbindung direkt vor dem Netzausgang ein weiteres Filter, welches zur Unterdrückung von meist hochfrequenten Störsignalen vorgesehen ist. Die Störsignale stammen beispielsweise von einem Wechselspannungs-Gleichspannungswandler eines an den Netzausgang angeschlossenen Gerätes. Damit sich solche Störsignale nicht dem modulierten HF-Signal überlagern, werden sie von diesem Filter herausgefiltert.

Vorzugsweise befindet sich in der Datenverbindung, d.h. zwischen der Frequenzweiche und dem Datenanschluss ein zweiter Überspannungs-Grobschutz. Dieser muss nur für die in der Frequenzweiche über das Hochpassfilter ausgekoppelten Energie der transienten Überspannungen ausgelegt sein. Der grösste Teil der Energie der transienten Überspannungen befindet sich ja in den niederfrequenten Anteilen des Gesamtsignals, welche zuvor über das Tiefpassfilter herausgefiltert werden.

Zur Unterdrückung von Störsignalen, welche typischerweise Gleichtaktsignale sind, ist in der Datenverbindung erfindungsgemäss ein Symmetrierer vorgesehen. Dieser besteht beispielsweise aus einem Transformator und einer Gleichtaktunterdrückung. Der Transformator, etwa ein Kleinsignaltransformator, überträgt das zu sendende, asymmetrische und modulierte HF-Signal in ein bezüglich einem beliebigen Signalbezugspotential (Masse) symmetrisches Sendesignal und dient gleichzeitig zur galvanischen Trennung von Netz- und Datenanschluss. Die Gleichtaktunterdrückung erfolgt durch zwei magnetisch eng gekoppelte Spulen, welche dem Transformator in Serie geschaltet sind. Diese unterstützen und verbessern die Symmetriewirkung des Transformators, indem sie für Gleichtaktanteile im Signal eine hohe Impedanz darstellen. Diese Kombination von Transformator und Spulen bewirkt die gewünschte Unterdrückung der Störsignale.

Um auch Geräte, welche am Datenanschluss der Koppelvorrichtung angeschlossen sind, vor Zerstörung durch zu hohe Spannungen zu schützen, ist der Datenanschluss bevorzugt durch einen Überspannungs-Feinschutz abgesichert. Dieser muss derart dimensioniert sein, dass er bei der maximal zu erwartenden Spannung des zu sendenden Signals noch keinen Einfluss auf das Signal ausübt, dass er aber Überspannungen, welche die Elektronik der Datenübertragungseinrichtung, beispielsweise der Sende/Empfangsvorrichtung, gefährden können, ableitet.

Bei einer bevorzugten Ausführungsform der Koppelvorrichtung ist deren Netzanschluss nicht nur gegen Überspannungen, sondern auch gegen Überströme abgesichert. Hierzu wird eine Überstromsicherung verwendet, bei welcher jede Phase und der Nullleiter des Niederspannungs-Stromversorgungsnetzes je über einen Überstromunterbrecher geführt wird. Ein Überstromunterbrecher unterbricht die entsprechende Leitung, falls der Strom, beispielsweise infolge eines Defektes, zu gross wird.

Die Überstromsicherung ist vorzugsweise zweistufig ausgebildet. Die erste Stufe ist dimensioniert für hohe Abschaltströme, die zweite als normale Gerätesicherung. Die zweite Stufe ist in jedem Fall vorgesehen und die erste Stufe ist beispielsweise dann notwendig, wenn die Koppelvorrichtung bei einer Hausinstallation vor der hauseigenen Sicherung an das Niederspannungs-Stromversorgungsnetz angeschlossen wird. Die zweite Stufe alleine würde hierfür nicht ausreichen.

Zur Übertragung von Nachrichten über ein Niederspannungs-Stromversorgungsnetz wird vorzugsweise eine Anordnung gemäss Anspruchs 8 verwendet. Diese Anordnung umfasst ein erstes und ein zweites Datenendgerät, eine erste und eine zweite Sende/Empfangsvorrichtung sowie einen ersten und einen zweiten Koppler. Das erste Datenendgerät ist ausgebildet zur Generierung der zu übertragenden Nachrichten und ist verbunden mit der ersten Sende/Empfangsvorrichtung, welche Mittel zur Erzeugung eines hochfrequenten Sendesignals aus den vom ersten Datenendgerät empfangenen Nachrichten aufweist. Dies geschieht beispielsweise durch Aufmodulieren der Nachrichten auf ein hochfrequentes Trägersignal. Die erste Sende/Empfangsvorrichtung ist ihrerseits mit dem ersten Koppler verbunden, welcher zum Einkoppeln des Sendesignals ins Niederspannungs-Stromversorgungsnetz ausgebildet ist. Das Sendesignal wird nach der Übertragung über das Niederspannungs-Stromversorgungsnetz vom zweiten Koppler, welcher hierzu über die entsprechenden Mittel verfügt, wieder aus dem Niederspannungs-Stromversorgungsnetz ausgekoppelt. Die zweite Sende/Empfangsvorrichtung wiederum weist Mittel zur Rückgewinnung der Nachrichten aus dem vom zweiten Koppler aus dem Niederspannungs-Stromversorgungsnetz ausgekoppelten Sendesignal auf. Sie beinhaltet beispielsweise Mittel zum Demodulieren des empfangenen, mit den Nachrichten modulierten HF-Trägersignals. Die von der zweiten Sende/Empfangsvorrichtung rückgewonnenen Nachrichten werden an das zweite Datenendgerät weitergegeben. Dieses schliesslich ist derart ausgebildet, dass es die Nachrichten empfangen und in gewünschter Weise weiterverarbeiten kann.

In den meisten Fällen werden die Datenendgeräte, die Sende/Empfangsvorrichtungen und auch die Koppler derart ausgebildet sein, dass Nachrichten nicht nur in einer, sondern in beiden Richtungen über das Niederspannungs-Stromversorgungsnetz übertragen werden können.

Vorzugsweise weist zumindest einer der beiden Koppler neben einem Netzanschluss zum Anschliessen an das Niederspannungs-Stromversorgungsnetz und einem Datenanschluss zum Anschliessen des Kopplers an eine Sende/Empfangsvorrichtung einen Netzausgang auf, über welchen zur Energieversorgung zumindest eine Sende/Empfangsvorrichtung oder ein Datenendgerät an das Niederspannungs-Stromversorgungsnetz angeschlossen ist.

Bei einer bevorzugten Variante dieser Anordnung ist der Netzanschluss desjenigen Kopplers mit dem Netzausgang derart ausgebildet, dass er an ein Niederspannungs-Stromversorgungsnetz mit wenigstens vier Stromleitern, d.h. einem Nullleiter und zumindest drei Phasenleitern angeschlossen werden kann. Zur Auswahl derjenigen beiden Stromleiter, über welche das HF-Signal übertragen werden soll, bzw. welche zum Erripfangen des HF-Signals mit den Eingängen der Sende/Empfangsvorrichtung verbunden werden müssen, ist in diesem Fall ein Stromleiterwähler vorgesehen.

Der Stromleiterwähler kann beispielsweise aufgrund von Steuersignalen, welche ihm von der Sende/Empfangsvorrichtung geliefert werden, aus den verfügbaren Stromleitern die beiden auswählen, welche die besten Bedingungen für die Datenübertragung, z.B. die beste Übertragungsqualität bieten.

Damit die Geräte und Schaltungen optimal geschützt und Überspannungen gefahrlos abgeleitet werden können, ist_der Netzanschluss desjenigen Kopplers mit dem Netzausgang derart ausgebildet, dass er an ein Niederspannungs-Stromversorgungsnetz mit einem Schutzleiter angeschlossen werden kann. Der Schutz- bzw. Erdleiter, wie er auch genannt wird, ist im Koppler weitergeführt, wobei auftretende Überspannungen vom ersten oder vom zweiten Überspannungs-Grobschutz bzw. vom Überspannungs-Feinschutz auf das Potential dieses Schutzleiters abgeleitet werden.

Das über das Niederspannungs-Stromversorgungsnetz zu übertragende, unsymmetrische HF-Signal wird vom Symmetrierer in ein bezüglich dem Signalbezugspotential symmetrisches Sendesignal umgewandelt. Ist ein Schutzleiter vorhanden, kann das Signalbezugspotential mit dem Schutzleiterpotential übereinstimmen, d.h. mit diesem verbunden sein. Dadurch wird die unerwünschte elektromagnetische Abstrahlung auf der gesamten Übertragungsstrecke möglichst gering gehalten.

Umgekehrt wird das aus dem Niederspannungs-Stromversorgungsnetz ausgekoppelte, symmetrische HF-Signal vom Symmetrierer in ein asymmetrisches Signal umgewandelt, welches zur Sende/Empfangsvorrichtung geliefert wird. Hierbei werden unsymmetrische Störsignale (Gleichtaktsignale), welche auf der gesamten Übertragungsstrecke eingekoppelt werden können, vom Symmetrierer weitgehend unterdrückt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer Anordnung zur Übertragung von Nachrichten zwischen zwei Datenendgeräten über ein Stromversorgungsnetz;
- Fig. 2: eine schematische Darstellung einer erfindungsgemässen Koppelvorrichtung;
- Fig. 3: eine Koppelvorrichtung zur Übertragung eines HF-Signals über ein 3phasiges Niederspannungs-Stromversorgungsnetz mit einem Schutzleiter;
- Fig. 4: eine mögliche Ausführungsform einer Frequenzweiche für die Koppelvorrichtung nach Fig. 3;
- Fig. 5: eine mögliche Ausführungsform eines Überspannungs-Grobschutzes des Netzausgangs der Koppelvorrichtung nach Fig. 3;
- Fig. 6: eine mögliche Ausführungsform eines Überspannungs-Grobschutzes im Datenpfad der Koppelvorrichtung nach Fig. 3;
- Fig. 7: eine mögliche Ausführungsform eines Überspannungs-Feinschutzes im Datenpfad der Koppelvorrichtung nach Fig. 3 und
- Fig. 8: eine mögliche Ausführungsform eines Symmetrierers im Datenpfad der Koppelvorrichtung nach Fig. 3.

Grundsätzlich sind in den Figuren gleiche Teile mit gleichen Bezugszeichen versehen.

### Wege zur Ausführung der Erfindung

Im Folgenden soll die Erfindung anhand eines Beispiels sowie anhand einiger Ausführungsbeispiele von Teilschaltungen näher erläutert werden.

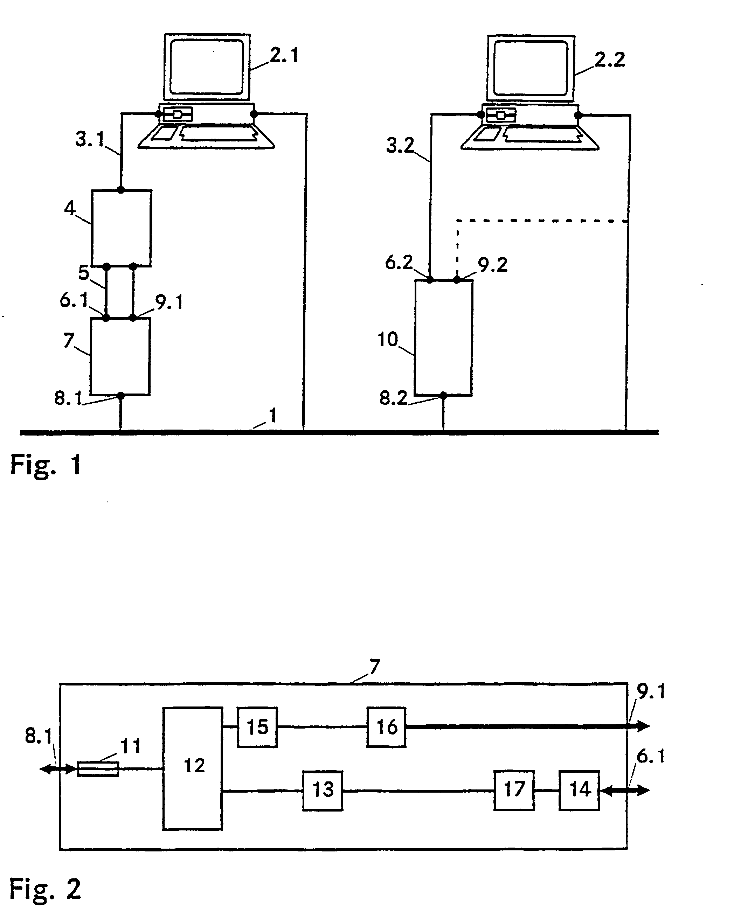

Figur 1 zeigt eine schematische Darstellung einer Anordnung zur Übertragung von Nachrichten über ein Niederspannungs-Stromversorgungsnetz 1. Die Nachrichten werden von einem ersten Computer 2.1 generiert und über eine Datenleitung 3.1 an ein Modem 4 weitergegeben, welches seinerseits über eine HF-Leitung 5 mit dem Datenanschluss 6.1 eines Kopplers 7 verbunden ist. Das Modem 4 moduliert die Nachrichten einem hochfrequenten Trägersignal auf, erzeugt auf diese Weise ein HF-Signal und gibt dieses über die HF-Leitung 5 an den Koppler 7 weiter. Dieser ist mit seinem Netzanschluss 8.1 mit dem Niederspannungs-Stromversorgungsnetz 1 verbunden. Zusätzlich weist der Koppler 7 einen Netzausgang 9.1 auf, an welchem das Modem 4 zwecks Versorgung mit elektrischer Energie angeschlossen ist. Der Computer 2.1 ist direkt an das Niederspannungs-Stromversorgungsnetz 1 angeschlossen.

Das HF-Signal wird vom Koppler 7 in das Niederspannungs-Stromversorgungsnetz 1 eingekoppelt. Nach der Übertragung über das Niederspannungs-Stromversorgungsnetz 1 wird das HF-Signal über den Netzanschluss 8.2 eines Koppelmodems 10, wieder aus dem Niederspannungs-Stromversorgungsnetz 1 ausgekoppelt. Das Koppelmodem 10 ist quasi eine Kombination einer erfindungsgemässen Koppelvorrichtung und eines Modems. Die Koppelvorrichtung ist also in ein Modem integriert und der zusätzliche Netzausgang der Koppelvorrichtung wird als zusätzlicher Netzausgang 9.2 des Koppelmodems 10 nach aussen geführt. Der Datenanschluss der im Koppelmodem 10 integrierten Koppelvorrichtung ist intern mit dem entsprechenden Signaleingang des Modemteils verbunden. Das Koppelmodem 10 demoduliert das ausgekoppelte HF-Signal und gibt die Nachrichten über den Datenanschluss 6.2 und die Datenleitung 3.2 weiter an einen zweiten Computer 2.2. Dieser ist zwecks Stromversorgung wiederum direkt am Niederspannungs-Stromversorgungsnetz 1 angeschlossen. Der Computer 2.2 könnte, wie gestrichelt eingezeichnet, jedoch auch am Netzausgang 9.2 des Koppelmodems 10 angeschlossen werden.

In Figur 2 ist etwas detaillierter der Koppler 7 dargestellt, wie er in der Anordnung nach Figur 1 verwendet wird. Der Koppler weist drei Ein- bzw. Ausgänge auf: Den Netzanschluss 8.1, den Datenanschluss 6.1 und den Netzausgang 9.1. Der Netzanschluss 8.1 ist abgesichert durch eine Überstromsicherung 11. Nach der Überstromsicherung 11 folgt eine Frequenzweiche 12, welche das HF-Signal in das Niederspannungs-Stromversorgungsnetz ein- bzw. es aus diesem auskoppelt. Ein über den Netzanschluss 8.1 empfangenes Gesamtsignal wird durch die Frequenzweiche 12 in einen hochfrequenten und einen niederfrequenten Anteil aufgespaltet, wobei der hochfrequente Anteil über die Datenverbindung zum Datenanschluss 6.1 und der niederfrequente Anteil über die Netzverbindung zum Netzausgang 9.1 geführt wird.

Der Datenanschluss 6.1 ist durch einen Überspannungs-Grobschutz 13 sowie einen Überspannungs-Feinschutz 14 gegen Überspannungen abgesichert, wobei sich beide Schutzvorrichtungen in der Datenverbindung befinden. Weiter befindet sich auch in der Netzverbindung ein Überspannungs-Grobschutz 15, welcher den Netzausgang 9.1 vor Überspannungen absichert.

Zur Unterdrückung von hochfrequenten Signalanteilen, welche von aussen über den Netzausgang 9.1 in den Koppler 7 eingeführt werden und die Datenübertragung über das Niederspannungs-Stromversorgungsnetz erheblich beeinträchtigen können, ist ein Filter 16 vorgesehen.

Der Symmetrierer 17, welcher sich in der Datenverbindung befindet, wandelt das über den Datenanschluss 6.1 empfangene, asymmetrische HF-Signal in ein symmetrisches Sendesignal bzw. das über den Netzanschluss empfangene, symmetrische Empfangssignal in ein asymmetrisches HF-Signal zur Weitergabe an das nachfolgende Modem um. Gleichzeitig dient der Symmetrierer 17 zur Gleichtaktunterdrückung der über das Niederspannungs-Stromversorgungsnetz empfangenen Signale sowie zur galvanischen Trennung von Netzanschluss 8.1 und Datenanschluss 6.1.

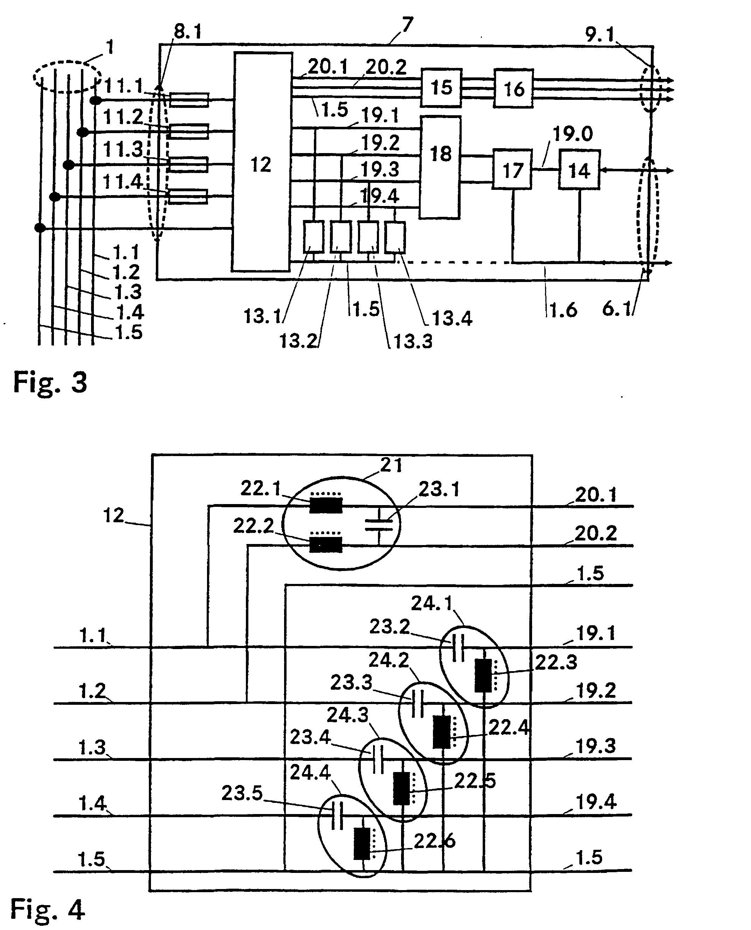

Figur 3 zeigt den Koppler 7 für den Fall eines 5-poligen Niederspannungs-Stromversorgungsnetzes 1 mit einem Nullleiter 1.1, drei Phasenleitem 1.2, 1.3 und 1.4 sowie einem Erdleiter 1.5. Der Nullleiter 1.1 und die Phasenleiter 1.2. bis 1.4 sind jeweils durch einen Überstromunterbrecher 11.1 bis 11.4 gegen unerwünscht hohe Ströme in den einzelnen Leitern abgesichert.

Dargestellt ist wiederum die Frequenzweiche 12, deren HF-Ausgang, d.h. der Ausgang in Richtung Datenanschluss mit den hochfrequenten Anteilen des Gesamtsignal, einerseits den durchkontaktierten Erdleiter 1.5, andererseits die vier Hochpass-gefilterten Stromleiter, d.h. den Nullleiter 19.1 und die drei Phasenleiter 19.2 bis 19.4 aufweist. Der NF-Ausgang, d.h. der Ausgang mit den niederfrequenten Anteilen des Gesamtsignals, welcher auf den Netzausgang 9.1 geführt wird, weist in diesem Beispiel nur drei Leiter auf: Den durchkontaktierten Erdleiter 1.5 sowie den Tiefpass-gefilterten Nullleiter 20.1 als auch einen Tiefpass-gefilterten Phasenleiter 20.2. Selbstverständlich könnten auch alle Phasenleiter auf den Netzausgang 9.1 geführt werden, damit auch Geräte mit 5-poligem Netzanschluss an den Koppler angeschlossen werden können.

Dargestellt ist auch der Überspannungs-Grobschutz 13 in der Datenverbindung, welcher aufgeteilt ist in je einen Überspannungs-Grobschutz 13.1 bis 13.4 für den Nullleiter 19.1 und die drei Phasenleiter 19.2 bis 19.4.

Weiter sind sowohl der Symmetrierer 17, das Filter 16, der Überspannungs-Grobschutz 15 und der Überspannungs-Feinschutz 14 eingezeichnet, wobei jeweils die entsprechende Anzahl Anschlussdrähte dargestellt ist.

Zusätzlich zur Darstellung des Kopplers 7 in Figur 2 ist hier ein Stromleiterwähler 18 dargestellt, welcher notwendig ist, wenn das Niederspannungs-Stromversorgungsnetz 1 mehr als zwei Stromleiter zur Übertragung von HF-Signalen aufweist. Im vorliegenden Beispiel weist das Niederspannungs-Stromversorgungsnetz 1 vier Stromleiter auf, weshalb mit dem Stromleiterwähler 18 jeweils zwischen zwei beliebigen der vier Stromleiter und den beiden Eingängen des Symmetrierers 17 eine elektrisch leitende Verbindung hergestellt wird. Mit dem Symmetrierer 17 wird unter anderem eine galvanische Trennung seiner Eingänge und seiner Ausgänge erreicht und das Ausgangssignal wird auf einem Signalleiter 19.0 asymmetrisch gegenüber Masse 1.6 ausgegeben. Mit der gestrichelten Linie zwischen dem Erdleiter 1.5 und Masse 1.6 ist angedeutet, dass sie auch miteinander verbunden sein und somit gleiches Potential aufweisen können.

Figur 4 zeigt die Frequenzweiche 12 für den Koppler 7 aus Figur 3, d.h. für einen Koppler 7 zum Anschliessen an ein 5-poliges Niederspannungs-Stromversorgungsnetz 1. Dargestellt sind (ohne die Überstromunterbrecher 11.1 bis 11.4) die fünf Eingänge: Der Nullleiter 1.1, die drei Phasenleiter 1.2 bis 1.4 sowie der Erdleiter 1.5, wobei der Nullleiter 1.1 und der Phasenleiter 1.2 über ein Tiefpassfilter 21, welches aus zwei Spulen 22.1 und 22.2 und einem Kondensator 23.1 besteht, auf den NF-Ausgang geführt werden. Dieser umfasst neben den Tiefpass-gefilterten Nullleiter 20.1 und Phasenleiter 20.2 auch den Erdleiter 1.5, welcher direkt durchkontaktiert wird.

Die Spulen 22.1 und 22.2 sind handelsübliche Netzdrosseln mit einer Induktivität von beispielsweise 100 µH. Sie müssen so ausgelegt sein, dass sie den Nennstrom des nachfolgenden zu speisenden Modems ohne Sättigungserscheinungen führen können. Der Kondensator 23.1 ist ein handelsüblicher X-Kondensator mit einer Kapazität von beispielsweise 100 nF. Er kann auch als Teil des nachfolgenden Filters 16 ausgebildet sein.

Weiter werden der Nullleiter 1.1 und die drei Phasenleiter 1.2 bis 1.4 je über ein Hochpassfilter 24.1, 24.2, 24.3 und 24.4 auf den HF-Ausgang der Frequenzweiche 12 geführt. Jedes dieser Hochpassfilter 24.1 bis 24.4 besteht aus je einem Kondensator 23.2 bis 23.5 und einer Spule 22.3 bis 22.6. Der HF-Ausgang umfasst daher die vier hochpassgefilterten Stromleiter: Nullleiter 19.1 und Phasenleiter 19.2 bis 19.4 sowie den Erdleiter 1.5, welcher auch beim HF-Ausgang direkt durchkontaktiert ist.

Die Kondensatoren 23.2 bis 23.5 sind beispielsweise Sicherheitskondensatoren der Klasse Y mit einer Kapazität von 10nF. Zu beachten sind die gerätespezifischen Vorschriften bezüglich Schutzleiterstrom (Ableitstrom): Der niederfrequente Strom durch die Kondensatoren 23.2 bis 23.5, herrührend von der Stromversorgungsspannung, geht in den Ableitstrom des Gerätes ein. Die Spulen 22.3 bis 22.6 sind handelsübliche Breitband-Drosselspulen, beispielsweise mit 6-Loch-Kern aus hochpermeablem Material.

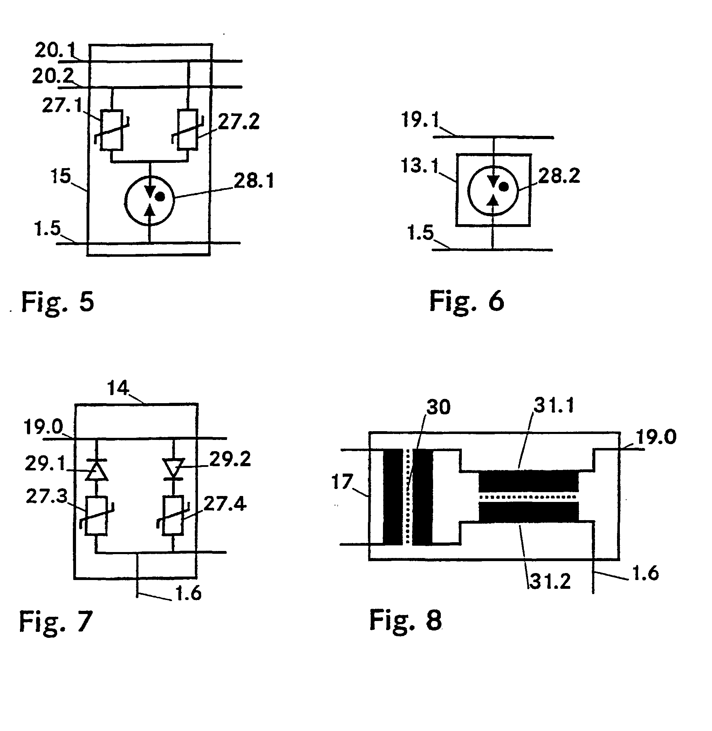

Figur 5 zeigt eine mögliche Ausführungsform für den Überspannungs-Grobschutz 15 mit drei Eingängen und drei Ausgängen aus Figur 3. Er besteht aus zwei spannungsabhängigen Widerständen 27.1 und 27.2, beispielsweise Metalloxid-Varistoren, sowie einem Überspannungsableiter 28.1. Die spannungsabhängigen Widerstände 27.1 und 27.2 sind auf einer Seite mit dem Nullleiter 20.1 resp. dem Phasenleiter 20.2 und auf der anderen Seite mit dem Überspannungsableiter 28.1 verbunden. Der Überspannungsableiter 28.1 ist z.B. ein gasgefüllter Überspannungsableiter und ist mit der zweiten Elektrode mit dem Erdleiter 1.5 verbunden. Da das Tiefpassfilter 21 (siehe Figur 4) nur den energiearmen, hochfrequenten Anteil aus einer transienten Überspannung aus dem Niederspannungs-Stromversorgungsnetz herausfiltert, ist er für die gesamte Energie einer solchen Überspannung ausgelegt.

In Figur 6 ist eine mögliche Ausführungsvariante des Überspannungs-Grobschutzes 13.1 für den Nullleiter 19.1 in der Datenverbindung dargestellt. Er besteht lediglich aus einem gasgefüllten Überspannungsableiter 28.2, welcher mit seiner ersten Elektrode mit dem Nullleiter 19.1 und mit seiner zweiten Elektrode mit dem Erdleiter 1.5 verbunden ist. Ein solcher Überspannungsableiter 28.2 eignet sich am besten, weil er einerseits eine schnelle Ansprechzeit und andererseits eine geringe Kapazität aufweist, was praktisch keine Signaldämpfung bewirkt. Dieser Überspannungs-Grobschutz 13.1 ist nur für die über das Hochpassfilter 24.4 (siehe Figur 4) ausgekoppelte Energie einer transienten Überspannung aus dem Niederspannungs-Stromversorgungsnetz ausgelegt.

Der Überspannungs-Grobschutz 13.2 bis 13.4 für die drei Phasenleiter 19.2 bis 19.4 ist identisch mit dem eben beschriebenen Überspannungs-Grobschutz 13.1, wobei jeweils an die Stelle des Nullleiters 19.1 einer der drei Phasenleiter 19.2 bis 19.4 tritt.

In Figur 7 ist eine beispielhafte Ausführung des Überspannungs-Feinschutzes 14 (siehe Figur 3) dargestellt. Er umfasst zwei Dioden 29.1 und 29.2, beispielsweise "high speed switching diodes" sowie zwei spannungsabhängige Widerstände, beispielsweise wiederum Metalloxid-Varistoren 27.3 und 27.4. Die erste Diode 29.1 ist mit ihrer Anode und die zweite Diode 29.2 mit ihrer Kathode mit der Signalleitung 19.0 (siehe Figur 3) verbunden. Beiden Dioden 29.1 und 29.2 ist jeweils einer der beiden Varistoren 27.3 bzw. 27.4 in Serie geschaltet, wobei die Varistoren mit ihrer anderen Elektrode mit dem Erdleiter 1.5 verbunden sind.

Die Kombination Diode - Varistor leitet entweder positive oder negative Überspannungsspitzen gegen Erdpotential ab. Die Varistoren 27.3 und 27.4 müssen so dimensioniert sein, dass sie bei der maximal zu erwartenden Spannung des zu sendenden Signals noch nicht leiten, und dass sie bei Spannungen, welche die Elektronik des nachfolgenden Gerätes, im vorliegenden Beispiel des Modems, gefährden könnten, leitend werden.

In Figur 8 ist schliesslich der Symmetrierer 17 in einer möglichen Ausführungsvariante dargestellt. Er besteht aus einem Kleinsignaltransformator 30, dem zwei magnetisch eng gekoppelte Spulen 31.1 und 31.2 in Serie geschaltet sind.

Ein zu sendendes HF-Signal wird über den Dateneingang 6.1 (siehe Figur 2) auf der Signalleitung 19.0 empfangen (mit Signalpotential gegenüber dem Erdpotential des Erdleiters 1.5) und ist durch den Überspannungs-Feinschutz 14 abgesichert. Der Signalleiter 19.0 ist mit der ersten der beiden magnetisch eng gekoppelten Spulen 31.1 und der Erdleiter 1.5 mit der anderen der beiden Spulen 31.2 verbunden. Die jeweils zweite Elektrode jeder Spule 31.1 bzw. 31.2 ist je mit einem Eingang des Kleinsignaltransformators 30 verbunden, welcher das zu sendende, asymmetrische HF-Signal in ein symmetrisches, galvanisch getrenntes Sendesignal überführt, das er über die beiden Stromleiter, mit welchen er durch den Stromleiterwähler 18 verbunden ist, zur Frequenzweiche 12 weitergibt.

Beim Empfangen eines durch die Frequenzweiche 12 aus dem Niederspannungs-Stromversorgungsnetz ausgekoppelten HF-Signals geschieht genau das gleiche in umgekehrter Reihenfolge, sodass das HF-Signal über den Datenanschluss 6.1 auf dem Signalleiter 19.0 gegenüber dem Erdleiter 1.5 an das nachfolgende Modem zur Demodulierung weitergegeben wird.

Die zwei magnetisch eng gekoppelten Spulen 31.1 und 31.2 verbessern die Symmetrierwirkung, indem sie für Gleichtakt-Anteile im HF-Signal eine hohe Impedanz darstellen. Beim Empfang eines HF-Signals bewirkt diese Kombination von Transformator und Spulen eine starke Unterdrückung von Störsignalen, welche typischerweise Gleichtaktsignale sind.

Zusammenfassend ist festzustellen, dass es die erfindungsgemässe Koppelvorrichtung erlaubt, über den Datenanschluss empfangene HF-Signale über den Netzanschluss der Koppelvorrichtung in ein Niederspannungs-Stromversorgungsnetz einzuspeisen und über die gleichen Anschlussleitungen ein weiteres, am Netzausgang der Koppelvorrichtung angeschlossenes Gerät mit elektrischer Energie aus diesem Niederspannungs-Stromversorgungsnetz zu versorgen. Mit derselben Koppelvorrichtung kann selbstverständlich auch ein HF-Signal aus dem Niederspannungs-Stromversorgungsnetz ausgekoppelt und über den Datenanschluss an andere Geräte weitergegeben werden, wobei das am Netzausgang angeschlossene Gerät wiederum gleichzeitig über den Netzanschluss der Koppelvorrichtung mit Energie versorgt wird.

## Patentansprüche

1. Koppelvorrichtung (7) zum Ein- bzw. Auskoppeln eines HF-Signals in ein bzw. aus einem Niederspannungs-Stromversorgungsnetz (1), **dadurch gekennzeichnet, dass** die Koppel-Vorrichtung (7) neben einem Netzanschluss (8.1) und einem Datenanschluss (6.1) einen Netzausgang (9.1) sowie einen Symmetrierer (17) aufweist, wobei der Symmetrierer (17) zwischen dem Netzanschluss (8.1) und dem Datenanschluss (6.1) liegt.

2. Koppelvorrichtung nach Anspruch 1, **dadurch gekennzeichnet, dass** zum Ein- bzw. Auskoppeln des HF-Signals in das bzw. aus dem Niederspannungs-Stromversorgungsnetz (1) eine mit dem Netzanschluss (8.1) verbundene Frequenzweiche (12) mit einem Hochpassfilter (24.1 bis 24.4) und einem Tiefpassfilter (21) vorgesehen ist, welche derart ausgebildet ist, dass über das Hochpassfilter (24.1 bis 24.4) eine Datenverbindung zwischen dem Netzanschluss (8.1) und dem Datenanschluss (6.1) und über das Tiefpassfilter (21) eine Netzverbindung zwischen dem Netzanschluss (8.1) und dem Netzausgang (9.1) hergestellt ist.

3. Koppelvorrichtung nach Anspruch 1 oder 2, **dadurch gekennzeichnet, dass** der Netzausgang (9.1) durch einen ersten Überspannungs-Grobschutz (15) abgesichert ist.

4. Koppelvorrichtung nach einem der Ansprüche 1 bis 3, **dadurch gekennzeichnet, dass** sich in der Netzverbindung direkt vor dem Netzausgang (9.1) ein Filter (16) zur Unterdrückung von Störsignalen befindet.

5. Koppelvorrichtung nach einem der Ansprüche 1 bis 4, **dadurch gekennzeichnet, dass** In der Datenverbindung ein zweiter Überspannungs-Grobschutz (13) vorgesehen ist.

6. Koppelvorrichtung nach einem der Ansprüche 1 bis 5, **dadurch gekennzeichnet, dass** der Datenanschluss (6.1) durch einen Überspannungs-Feinschutz (14) abgesichert ist.

7. Koppelvorrichtung nach einem der Ansprüche 1 bis 6, **dadurch gekennzeichnet, dass** der Netzanschluss (8.1) durch eine Überstromsicherung (11) abgesichert ist.

8. Anordnung zur Übertragung von Nachrichten über ein Niederspannungs-Stromversorgungsnetz (1) zwischen einem ersten und einem zweiten Datenendgerät (2.1, 2.2), **dadurch gekennzeichnet, dass** zumindest eines der Datenendgeräte (2.1) über eine Koppelvorrichtung (7) nach Anspruch 1 an das Niederspannungs-Stromversorgungsnetz (1) angeschlossen ist.

9. Anordnung nach Anspruch 8, **dadurch gekennzeichnet, dass** der Netzanschluss (8.1) der Koppelvorrichtung (7) derart ausgebildet ist, dass diese an ein Niederspannungs-Stromversorgungsnetz (1) mit wenigstens vier Stromleitern, d.h. einem Nullleiter (1.1) und zumindest drei Phasenleitern (1.2, 1.3, 1.4) angeschlossen werden kann und die Koppelvorrichtung (7) einen Stromleiterwähler (18) aufweist, welcher zur Auswahl derjenigen beiden Stromleiter ausgebildet ist, über weiche des HF-Signal übertragen werden soll.

10. Anordnung nach Anspruch 8 oder 9, **dadurch gekennzeichnet, dass** der Netzanschluss (8.1) der Koppelvorrichtung (7) derart ausgebildet ist, dass diese an ein Niederspannungs-Stromversorgungsnetz (1) mit einem Schutzleiter (1.5) angeschlossen werden kann.

11. Anordnung nach Anspruch 8, **dadurch gekennzeichnet, dass** das erste Datenendgerät (2.1) Mittel zur Generierung der Nachrichten aufweist und die Anordnung
- eine erste Sende/Empfangsvorrichtung (4) mit Mitteln zur Erzeugung eines hochfrequenten Sendesignals aus den Nachrichten,
- eine erste Koppelvorrichtung nach Anspruch 1 (7) mit Mitteln zum Einkoppein des Sendesignals In das Niederspannungs-Stromversorgungsnetz (1),
- eine zweite Koppelverrichtung nach Anspruch 1 (10) mit Mittein zum Auskoppeln des über das Niederspannungs-Stromversorgungsnetz (1) übertragenen Sendesignals,
- eine zweite Sende/Empfangsvorrichtung (10) mit Mitteln zur Rückgewinnung der Nachrichten aus dem von der zweiten Koppelvorrichtung (10) aus dem Niederspannungs-Stromversorgungsnetz (1) ausgekoppelten Sendesignal umfasst,
wobei das zweite Datenendgerät (2,2) Mittel zum Empfangen der von der zweiten Sende/Empfangsvorrichtung (10) rückgewonnenen Nachrichten aufweist,

## Claims

1. Coupling device (7) for coupling an HF signal into a low-voltage power supply network (1) or decoupling it therefrom, **characterised in that** in addition to a network connection (8.1) and a data connection (6.1) the coupling device (7) has a network output (9.1) together with a balancer (17), the balancer (17) being situated between the network connection (8.1) and the data connection (6.1).

2. Coupling device according to Claim 1, **characterised in that** for coupling the HF signal into the low-voltage power supply network (1) or decoupling it therefrom, a diplexer (12) is provided, which is connected to the network connection (8.1) and has a high-pass filter (24.1 to 24.4) and a low-pass filter (21), the diplexer being designed in such a way that a data connection is established between the network connection (8.1) and the data connection (6.1) via the high-pass filter (24.1 to 24.4) and a network connection is established between the network connection (8.1) and the network output (9.1) via the low-pass filter (21).

3. Coupling device according to Claim 1 or 2, **characterised in that** the network output (9.1) is protected by a first high-voltage overload protection (15).

4. Coupling device according to any one of Claims 1 to 3, **characterised in that** a filter (16) for suppressing interference signals is situated in the network connection immediately preceding the network output (9.1).

5. Coupling device according to any one of Claims 1 to 4, **characterised in that** a second high-voltage overload protection (13) is provided in the data connection.

6. Coupling device according to any one of Claims 1 to 5, **characterised in that** the data connection (6.1) is protected by a low-voltage overload protection (14).

7. Coupling device according to any one of Claims 1 to 6, **characterised in that** the network connection (8.1) is protected by an over-current protection (11).

8. Arrangement for communications between a first data terminal (2.1) and a second data terminal (2.2) via a low-voltage power supply network (1), **characterised in that** at least one of the data terminals (2.1) is connected to the low-voltage power supply network (1) by way of a coupling device (7) according to Claim 1.

9. Arrangement according to Claim 8, **characterised in that** the network connection (8.1) of the coupling device (7) is designed in such a way that the device can be connected to a low-voltage power supply network (1) with at least four electrical conductors, that is to say one neutral conductor (1.1) and at least three phase conductors (1.2, 1.3, 1.4), and the coupling device (7) has a conductor selector (18), which is designed to select the two conductors via which the HF signal is to be transmitted.

10. Arrangement according to Claim 8 or 9, **characterised in that** the network connection (8.1) of the coupling device (7) is designed in such a way that the device can be connected to a low-voltage power supply network (1) with a protective earthing conductor (1.5).

11. Arrangement according to Claim 8, **characterised in that** the first data terminal (2.1) has means of generating communications and the arrangement comprises
- a first transmit-receive device (4) with means of generating a high-frequency transmission signal from the communications,
- a first coupling device according to Claim 1(7) with means of coupling the transmission signal into the low-voltage power supply network (1),
- a second coupling device according to Claim 1(10) with means of decoupling the transmission signal transmitted via the low-voltage power supply network (1),
- a second transmit-receive device (10) with means of recovering the communications from the transmission signal decoupled from the low-voltage power supply network (1) by the second coupling device (10),
the second data terminal (2.2) having means of receiving the communications recovered by the second transmit-receive device (10).

## Revendications

1. Dispositif de couplage (7) pour coupler et découpler un signal HF dans ou hors d'un réseau d'alimentation en courant à basse tension (1), **caractérisé en ce que** le dispositif de couplage (7) présente outre un branchement au réseau (8.1) et une connexion pour données (6.1), une sortie réseau (9.1) ainsi qu'un symétriseur (17), le symétriseur (17) étant placé entre le branchement au réseau (8.1) et la connexion pour données (6.1).

2. Dispositif de couplage selon la revendication 1, **caractérisé en ce que**, pour coupler ou découpler le signal HF dans ou hors du réseau d'alimentation en courant à basse tension (1) un filtre de séquence (12) relié au branchement au réseau (8.1) est prévu avec un filtre passe-haut (24.1 à 24.4) et un filtre passe-bas (21), filtre de séquence qui est conçu de manière à ce que se crée par le filtre passe-haut (24.1 à 24.4) une liaison de données entre le branchement au réseau (8.1) et la connexion pour données (6.1) et par le filtre passe-bas (21) une liaison de réseau entre le branchement au réseau (8.1) et la sortie réseau (9.1).

3. Dispositif de couplage selon la revendication 1 ou 2, **caractérisé en ce que** la sortie réseau (9.1) est protégée par un fusible grossier pour haute tension (15).

4. Dispositif de couplage selon l'une quelconque des revendications 1 à 3, **caractérisé en ce que** dans la liaison de réseau se trouve directement avant la sortie réseau (9.1) un filtre (16) pour réprimer les signaux perturbateurs.

5. Dispositif de couplage selon l'une quelconque des revendications 1 à 4, **caractérisé en ce que** dans la liaison de données est prévu un second fusible grossier pour haute tension (13).

6. Dispositif de couplage selon l'une quelconque des revendications 1 à 5, **caractérisé en ce que** la connexion pour données (6.1) est protégée par un fusible fin pour haute tension (14).

7. Dispositif de couplage selon l'une quelconque des revendications 1 à 6, **caractérisé en ce que** le branchement au réseau (8.1) est protégé par une protection de surintensité (11).

8. Disposition pour la transmission d'informations par un réseau d'alimentation en courant à basse tension (1) entre un premier appareil de données et un second appareil de données (2.1, 2.2), **caractérisée en ce qu'**au moins un des appareils de données (2.1) est connecté par un dispositif de couplage (7) selon la revendication 1 au réseau d'alimentation en courant à basse tension (1).

9. Disposition selon la revendication 8, **caractérisée en ce que** le branchement au réseau (8.1) du dispositif de couplage (7) est conçu de telle manière que celui-ci peut être connecté à un réseau d'alimentation en courant à basse tension (1) avec au moins quatre conducteurs, c'est à dire un conducteur nul (1.1) et au moins trois conducteurs de phases (1.2, 1.3, 1.4) et que le dispositif de couplage (7) présente un sélectionneur de conducteur (18), lequel est conçu pour la sélection des deux conducteurs par lesquels le signal HF doit être transmis.

10. Disposition selon la revendication 8 ou 9, **caractérisée en ce que** le branchement au réseau (8.1) du dispositif de couplage (7) est conçu de telle manière que celui-ci peut être connecté à un réseau d'alimentation en courant à basse tension (1) avec un conducteur de protection (1.5).

11. Disposition selon la revendication 8, **caractérisée en ce que** le premier appareil de données (2.1) présente des moyens pour générer les informations et **en ce que** la disposition comprend
- un premier dispositif émetteur/récepteur (4) avec des moyens pour produire un signal émetteur à haute fréquence à partir des informations,
- un premier dispositif de couplage selon la revendication 1 (7) avec des moyens pour coupler le signal émetteur dans le réseau d'alimentation en courant à basse tension (1),
- un second dispositif de couplage selon la revendication 1 (10) avec des moyens pour découpler le signal émetteur transmis par le réseau d'alimentation en courant à basse tension (1),
- un second dispositif émetteur/récepteur (10) avec des moyens pour récupérer les informations à partir du signal émetteur découplé par le second dispositif de couplage (10) à partir du réseau d'alimentation en courant basse tension (1),
- le second appareil de données (2.2) présentant des moyens pour la réception d'informations récupérées par le second dispositif émetteur/récepteur (10).
